# EUROPÄISCHE PATENTSCHRIFT

(11) **EP 1 084 964 B1**
(45) Veröffentlichungstag und Bekanntmachung des Hinweises auf die Patenterteilung: **21.07.2004**
(21) Anmeldenummer: 00117244.4
(22) Anmeldetag: 14.08.2000
(51) Int. Cl.: B65G 19/02, B65G 19/22

(54) **Vorrichtung zum Transport von Gegenständen, insbesondere Zigarettengruppen**
Device for conveying articles, particularly groups of cigarettes
Dispositif pour le transport d'objets, notamment de lots de cigarettes

(30) Priorität: 17.09.1999 DE 19944780
(43) Veröffentlichungstag der Anmeldung: 21.03.2001
(73) Patentinhaber: Focke & Co. (GmbH & Co.), 27283 Verden (DE)
(72) Erfinder: Focke, Heinz, 27283 Verden (DE); Roesler, Burkard, 27337 Blender (DE)
(74) Vertreter: Bolte, Erich, Dipl.-Ing.

(56) Entgegenhaltungen:
- EP-A- 0 446 480
- DE-U- 8 604 603
- FR-A- 1 443 183
- US-A- 3 198 316
- US-A- 3 282 407

## Beschreibung

Die Erfindung betrifft eine Vorrichtung zum Transport von Gegenständen, insbesondere Zigarettengruppen, mit einem Endlosförderer, der quer zur Förderebene gerichtete Mitnehmer aufweist, die bewegbar am Endlosförderer befestigt und durch Führungsmittel derart relativ zum Endlosförderer bewegbar sind, dass bei Übernahme eines Gegenstands und/oder bei Richtungsänderung der Förderbewegung die Mitnehmer kurzzeitig eine der Förderrichtung entgegengesetzte Ausgleichsbewegung und vorzugsweise im Anschluss daran eine gegenläufige, in Förderrichtung weisende Rückbewegung durchführen.

Die US 3,198,316 zeigt eine Fördervorrichtung, bei der jeweils vorlaufende und nachlaufende Mitnehmer an einem Endlosförderer befestigt sind. Gegenstände werden gefördert, indem diese zwischen die Mitnehmer geklemmt werden. Um bei Übernahme der Gegenstände durch die Mitnehmer einen ausreichenden Abstand zwischen den Mitnehmern zu schaffen, wird der nachlaufende Mitnehmer entgegen der Förderbewegung zurückbewegt.

Die DE 86 04 603 zeigt einen umlaufenden Bogenförderer mit Greifern, die geöffnet und geschlossen werden können. Das Öffnen und Schließen der Greifer erfolgt im Verlaufe des Umlaufweges, speziell während des Herumlaufens um Umlenkrollen eines Zahnriemen aufweisenden Endlosförderers.

Der Transport empfindlicher Güter, beispielsweise von Zigarettengruppen als Inhalt einer Zigarettenpackung, ist bei zunehmend erhöhten Arbeitsgeschwindigkeiten problematisch. Die von Mitnehmern erfassten Gegenstände bzw. Zigarettengruppen werden im Moment der Übernahme durch einen Mitnehmer des Förderers mit verhältnismäßig hohen Kräften beaufschlagt. Ebenfalls problematisch sind die auf den Förderer bzw. auf die Mitnehmer wirkenden Kräfte bei abrupter Änderung der Förderrichtung. Dies gilt bei einem Endlosförderer vor allem für den Bereich der Umlenkung um Räder, Walzen oder dergleichen.

Der Erfindung liegt die Aufgabe zugrunde, Förderer für empfindliche Gegenstände so auszubilden bzw. zu steuern, dass beim Erfassen von zu transportierenden Gegenständen bzw. bei (abrupter) Änderung der Bewegungsrichtung auftretende Kräfte vermindert sind.

Zur Lösung dieser Aufgabe ist die erfindungsgemäße Vorrichtung dadurch gekennzeichnet, dass:
a) eine Halterung zur Befestigung der Mitnehmer am Endlosförderer ist schwenkbar mit dem Endlosförderer verbunden, derart, dass Kipp- bzw. Schwenkbewegungen der Mitnehmer in der Förderrichtung bzw. in der entgegengesetzten Richtung ausführbar sind,
b) im Bereich der auszuführenden Ausgleichsbewegung der Mitnehmer ist die Halterung zur Befestigung der Mitnehmer am Endlosförderer zwangsgeführt, nämlich durch Führungsrollen in einer ortsfesten Führungsnut,
c) die Führungsnut erstreckt sich über die gesamte Bewegungsbahn der Mitnehmer.

Durch diese Ausgestaltung bzw. Arbeitsweise des Förderers ist erreicht, dass die Mitnehmer im Moment der Übernahme eines Gegenstands, zum Beispiel einer Zigarettengruppe, eine geringere Fördergeschwindigkeit aufweisen und dadurch reduzierte Kräfte auf den Gegenstand übertragen. Nach Übernahme des Gegenstands wird der Mitnehmer in die Ausgangs- bzw. Normalstellung zurückbewegt. In entsprechender Weise wird verfahren, wenn der Mitnehmer, zum Beispiel durch Umlenkung des Endlosförderers, eine abrupte Richtungsänderung während der Bewegung erfährt. Im Anschluss daran wird durch entsprechende Ausgestaltung der Führungsmittel eine gegenläufige, also in Förderrichtung weisende Rückkehrbewegung des Mitnehmers ausgeführt.

Bei einer vorteilhaften Ausführungsform ist der Endlosförderer ein Gurtförderer, insbesondere ein Zahnriemen, an dessen Außenseite die Mitnehmer angebracht sind. Jeder Mitnehmer ist bewegbar, nämlich kippbar, am Gurt- bzw. Zahnriemen befestigt, wobei eine gewisse elastische Verformbarkeit des Förderers die gesteuerten Ausgleichsbewegungen der Mitnehmer fördert. Deren Bewegungen werden durch formschlüssige Führungen gesteuert, insbesondere durch seitliche, umlaufende Steuernuten, in denen Führungsrollen der Mitnehmer während des Transports ablaufen. Die Form bzw. der Verlauf der Steuernut bestimmt die Relativbewegungen der Mitnehmer.

Besonders vorteilhaft ist der erfindungsgemäße Förderer zum Transport von Zigarettengruppen innerhalb einer Verpackungsmaschine für Zigaretten geeignet. Die Gegenstände bzw. Zigaretten können durch Mitnehmer oder durch Taschen transportiert werden, die mit dem Förderer verbunden sind.

Weitere Einzelheiten und Besonderheiten der Erfindung werden nachfolgend anhand eines in den Zeichnungen dargestellten Ausführungsbeispiels der Vorrichtung näher erläutert. Es zeigt:
- Fig. 1: einen Ausschnitt einer Verpackungsmaschine für Zigaretten in schematischer Seitenansicht,
- Fig. 2: einen Endlosförderer in vereinfachter Seitenansicht,
- Fig. 3: einen Teilbereich des Endlosförderers gemäß Fig. 2 in vergrößertem Maßstab,
- Fig. 4: eine Einzelheit des (Zigaretten-)Förderers in Seitenansicht bzw. im Querschnitt, bei stark vergrößertem Maßstab,
- Fig. 5: den Förderer gemäß Fig. 4 in Rückansicht bzw. im Querschnitt in der Schnittebene V-V der Fig. 1, bei verkleinertem Maßstab,
- Fig. 6: eine Einzelheit der Darstellung gemäß Fig. 5 bei vergrößertem Maßstab,

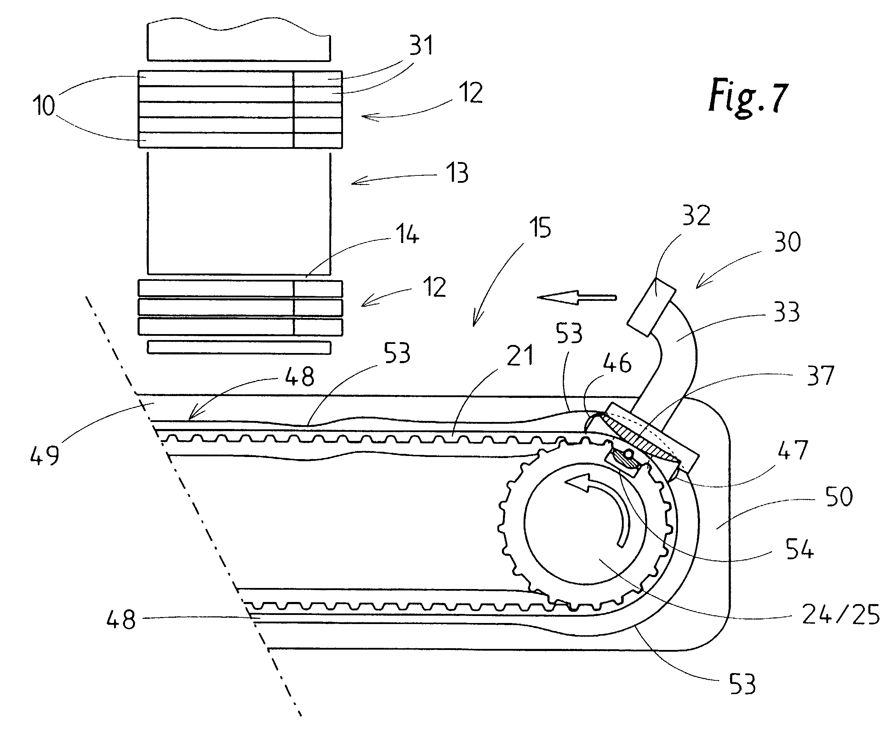

- Fig. 7: einen Bereich eines Zigarettenförderers in Seitenansicht, teilweise geschnitten,

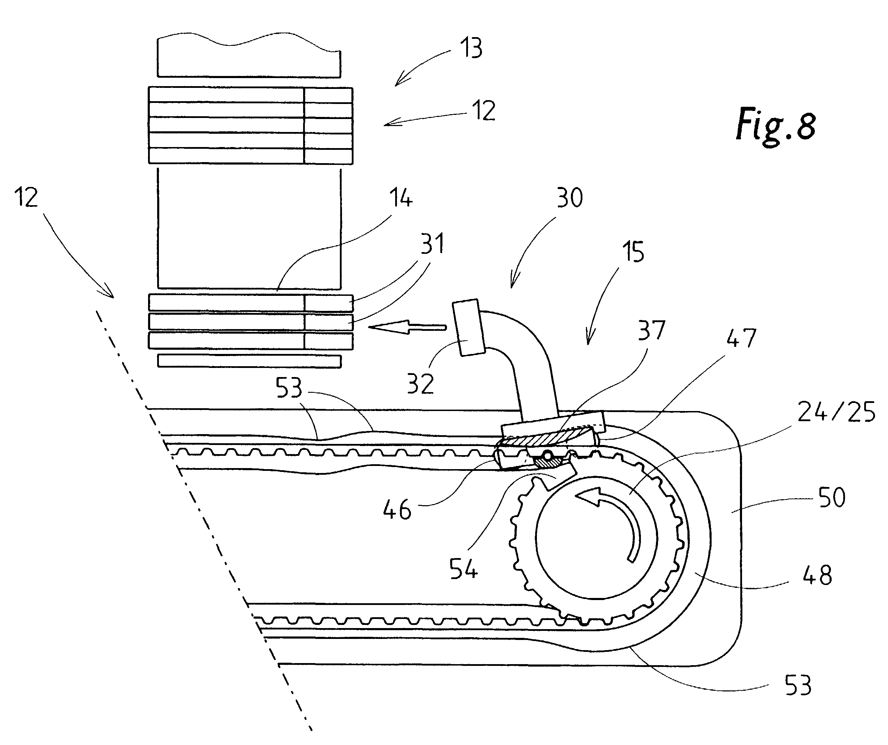

- Fig. 8: die Einzelheit gemäß Fig. 7 in einer veränderten Relativstellung,
- Fig. 9: eine Darstellung entsprechend Fig. 7 und Fig. 8 bei nochmals veränderter Relativstellung eines Mitnehmers.

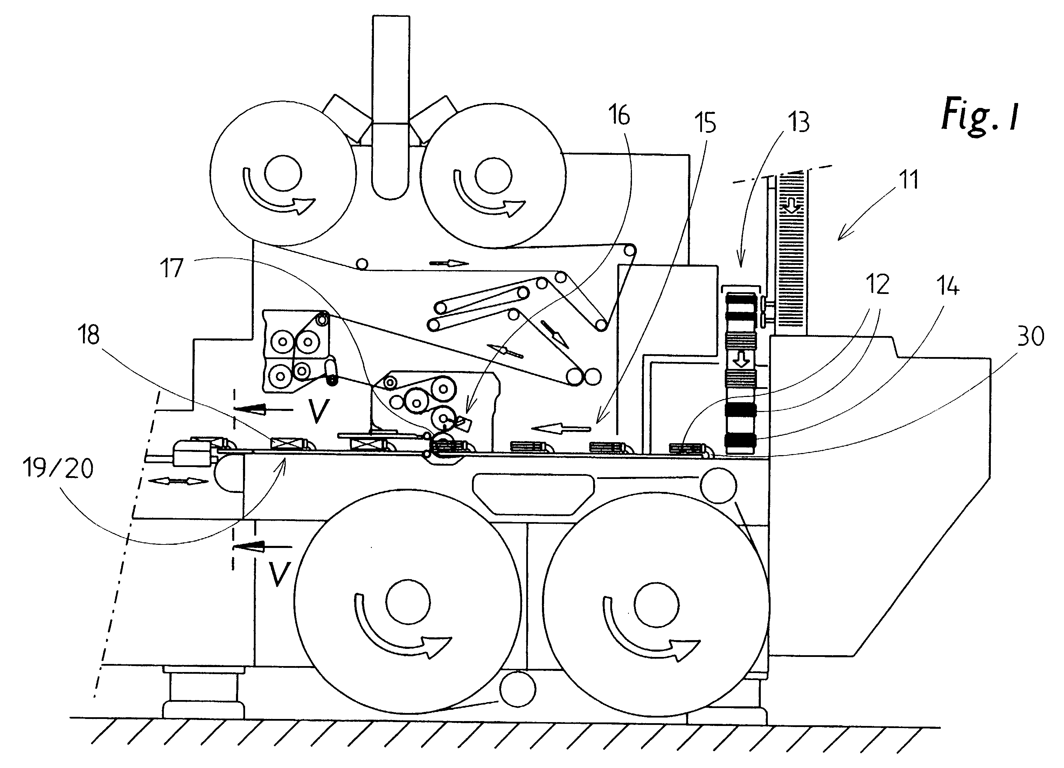

Das in den Zeichnungen dargestellte Ausführungsbeispiel befasst sich mit Einzelheiten einer Verpackungsmaschine für Zigaretten 10. Fig. 1 zeigt einen Teilbereich einer derartigen Verpackungsmaschine. Typisch ist ein Zigaretten-Magazin 11, dem Zigarettengruppen 12 entsprechend dem Inhalt einer Zigarettenpackung entnommen werden. Die Zigarettengruppen 12 gelangen nach dem Austritt aus dem Zigaretten-Magazin 11 in einen Zigaretten-Revolver 13, der in aufrechter Ebene taktweise drehend angetrieben wird und in Taschen 14 jeweils eine komplette Zigarettengruppe 12 aufnimmt.

Die Zigarettengruppen 12 werden einem Zigarettenförderer 15 zugeführt. Dieser transportiert die Zigarettengruppen in horizontaler Ebene zunächst zu einer ersten Faltstation 16, in deren Bereich ein Zuschnitt 17 einer Innenumhüllung um die Zigarettengruppe 12 herumgefaltet wird. Der Innenzuschnitt besteht üblicherweise aus Stanniol oder Papier. Die so gebildeten Zigarettenblöcke 18 werden im vorliegenden Falle durch denselben Zigarettenförderer 15 weitertransportiert zu nachfolgenden Faltaggregaten.

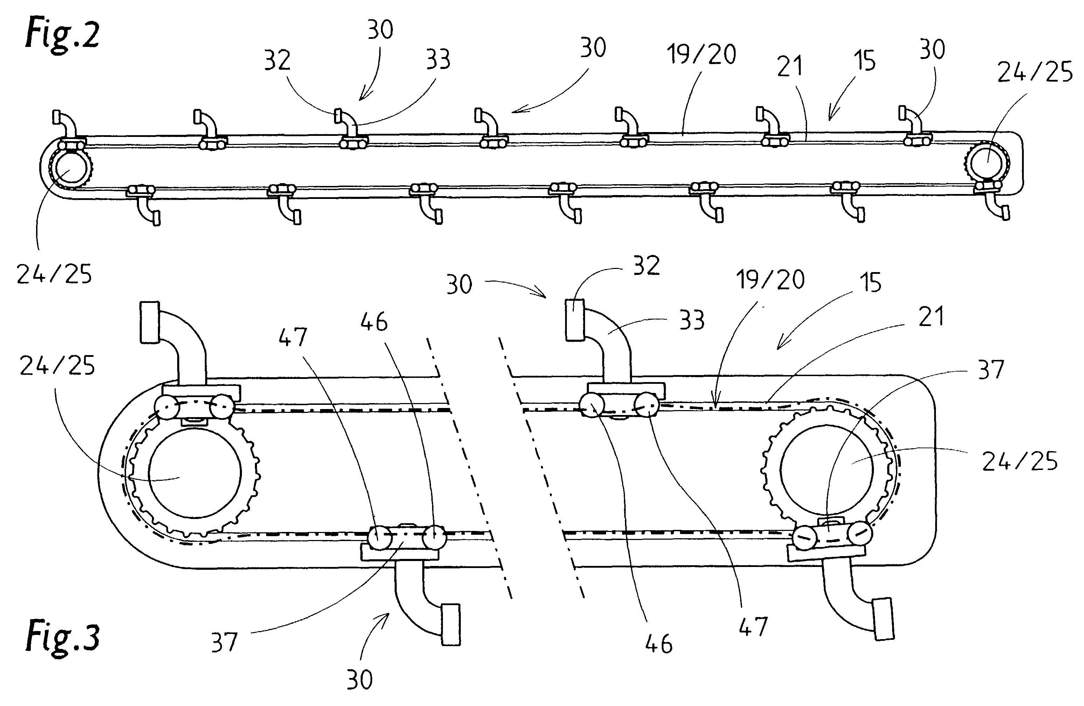

Der Zigarettenförderer 15 besteht aus einem Endlosförderer 19, 20. Bei dem dargestellten Ausführungsbeispiel ist die Vorrichtung auf zweibahnige Betriebsweise ausgerichtet. Der Zigarettenförderer 15 besteht demnach aus zwei nebeneinanderliegenden und hinsichtlich der Bewegungsabläufe übereinstimmenden Endlosförderern 19, 20, die je eine Zigarettengruppe 12 oder einen Zigarettenblock 18 (Fig. 3) transportieren auf parallelen Bahnen.

Die Endlosförderer 19, 20 sind Gurtförderer, und zwar in der Ausführung als Zahnriemen 21. Der Zahnriemen 21 ist jeweils mit nach innen gerichteten Zähnen 22 und zwischen diesen gebildeten Zahnlücken 23 versehen. Umlenkwalzen bzw. Umlenkräder 24, 25 sind entsprechend ausgebildet, also mit Vorsprüngen 26 und Vertiefungen 27, die in Form und Anordnung exakt mit den Zähnen 22 und Zahnlücken 23 der Zahnriemen 21 korrespondieren. Bei der zweibahnigen Ausgestaltung sind die beiden Umlenkräder 24, 25 auf einer gemeinsamen Welle 28 angeordnet. Diese ist an einem Ende gelagert und an einem anderen Ende mit einer Antriebswelle 29 für den Antrieb der Endlosförderer 19, 20 versehen.

Die Zigarettengruppen 12 bzw. Zigarettenblöcke 18 werden durch Mitnehmer 30 gefördert, die den Gegenstand - Zigarettengruppe 12/Zigarettenblock 18 - an deren Rückseite erfassen. Die Zigaretten 10 sind in Förderrichtung orientiert mit einem Filter 31 nach rückwärts weisend. Der Mitnehmer 30 besteht aus einem Kopf 32, der den Gegenstand an der Rückseite erfasst und einem bogenförmig ausgebildeten Steg 33. Letzterer ist mit dem Endlosförderer 19, 20 (mittelbar) verbunden. Die Zigarettengruppen 12 bzw. Zigarettenblöcke 18 liegen während des Transports durch den Zigarettenförderer 15 gleitend auf einer Bahnplatte 34 auf. Diese erstreckt sich hier über die volle Breite des Zigarettenförderers 15. Im Bereich der Bewegungsbahn der Mitnehmer 30 bzw. der Stege 33 sind Schlitze 35, 36 in der Bahnplatte 34 in Förderrichtung verlaufend angeordnet.

Die Mitnehmer 30 sind bei diesem Ausführungsbeispiel nicht unmittelbar mit den Endlosförderern 19, 20 verbunden, sondern mit einer quergerichteten Traverse 37, die die beiden Endlosförderer 19, 20 miteinander verbindet. Jeweils zwei Mitnehmer 30 sind an jeder Traverse 37 befestigt. Die Endlosförderer 19, 20 weisen eine Mehrzahl von mit Abstand angeordneten Traversen 37 auf.

Die Mitnehmer 30 bzw. deren Stege 33 sind an der Oberseite der im wesentlichen als Flachprofil ausgebildeten Traverse 37 befestigt, und zwar mit einem winkelförmigen Sockel 38. Die Traverse 37 ist im übrigen in besonderer Weise ausgebildet und mit den zugeordneten Zahnriemen 21 verbunden.

Die Zahnriemen sind im Bereich einer Vertiefung 39 an der Traverse 37 verankert. Die Verbindung ist so ausgebildet, dass der Mitnehmer 30 relativ zum Endlosförderer 19, 20 bewegbar, nämlich in der Ebene der Förderrichtung schwenkbar bzw. kippbar ist. Zu diesem Zweck ist im Bereich der Vertiefung der Traverse 37 auf der Außenseite des Zahnriemens 21 ein Stützkörper 40 mit balliger Anlagefläche 41 gebildet. Die Anlagefläche 41 wälzt sich bei Kippbewegungen des Mitnehmers 30 an der (glatten) Außenfläche des Zahnriemens 21 ab.

An der gegenüberliegenden, inneren, verzahnten Seite des Zahnriemens ist ein Gegenhalter 42 angebracht. Dieser ist als separates Formstück ausgebildet und mit der Traverse 37 (lösbar) verbunden. Der Gegenhalter 42 drückt den Zahnriemen 21 an die Anlagefläche 41 des Stützkörpers 40. Um die beschriebenen Kippbewegungen des Mitnehmers 30 zu ermöglichen, ist auch die dem Zahnriemen 21 zugekehrte Seite des Gegenhalters 42 mit einer balligen bzw. gewölbten Stützfläche 43 versehen. Die Stützfläche 43 liegt an entsprechend eben ausgebildeten Flächen der Zähne 22, nämlich von zwei benachbarten Zähnen 22, des Zahnriemens 21 an.

Der Gegenhalter 42 sitzt ebenfalls in der Vertiefung 39 der Traverse 37 und ist an dieser durch ein Verbindungsmittel befestigt. Es handelt sich dabei um einen Stift 44 mit zylindrischer Form. Der Stift 44 ist so bemessen und angeordnet, dass ein Teilquerschnitt, nämlich etwa die Hälfte, innerhalb einer Zahnlücke 23 des Zahnriemens 21 positioniert ist. Der andere Teil bzw. die andere Querschnittshälfte des Stifts 44 liegt in einer muldenförmigen Ausnehmung 45 des Gegenhalters 42. Die Mittelebene des Stifts 44 liegt demnach verhältnismäßig nahe an der neutralen Zone bzw. Ebene des Zahnriemens 21.

Stift 44 und Gegenhalter 42 bilden eine vorteilhafte, ausschließlich formschlüssige Verbindung von Organen mit einem Zahnriemen 21 unter Nutzung der geometrischen Form des Zahnriemens 21. Die Traverse 37 ist zu beiden Seiten der Vertiefung 39 mit Bohrungen 55 versehen. In diese treten Enden des Stifts 44 ein. Der Gegenhalter 42 ist in einem Teilbereich, nämlich an den Enden, im Querschnitt U-förmig ausgebildet. Im Bereich von Schenkeln 56 sind Durchtrittsbohrungen 57 gebildet, durch die der Stift 44 hindurchtritt. Auf diese Weise wird die formschlüssige (Steck-)Verbindung zwischen dem Zahnriemen 21 und der Traverse 37 geschaffen.

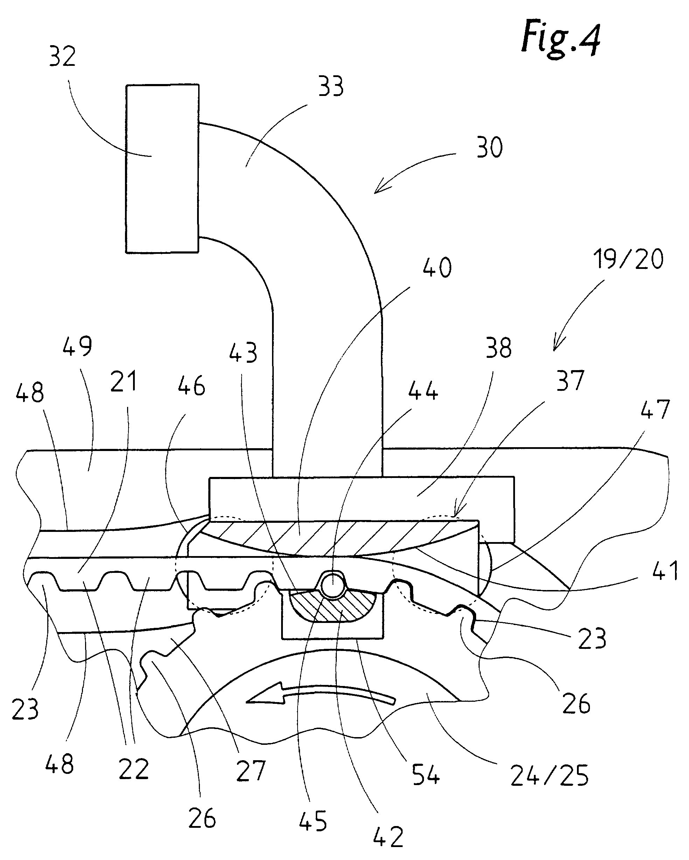

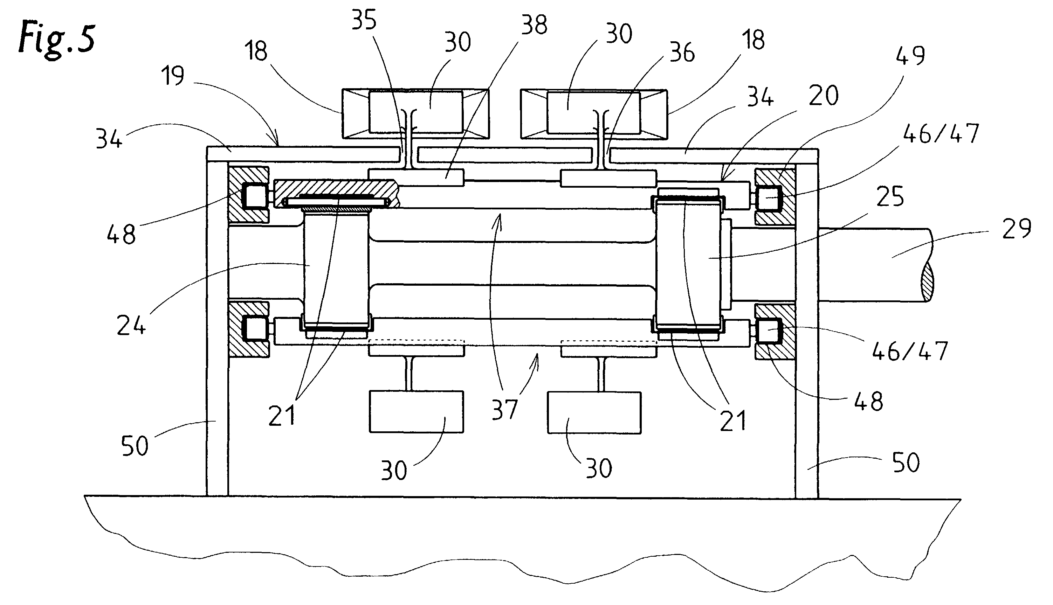

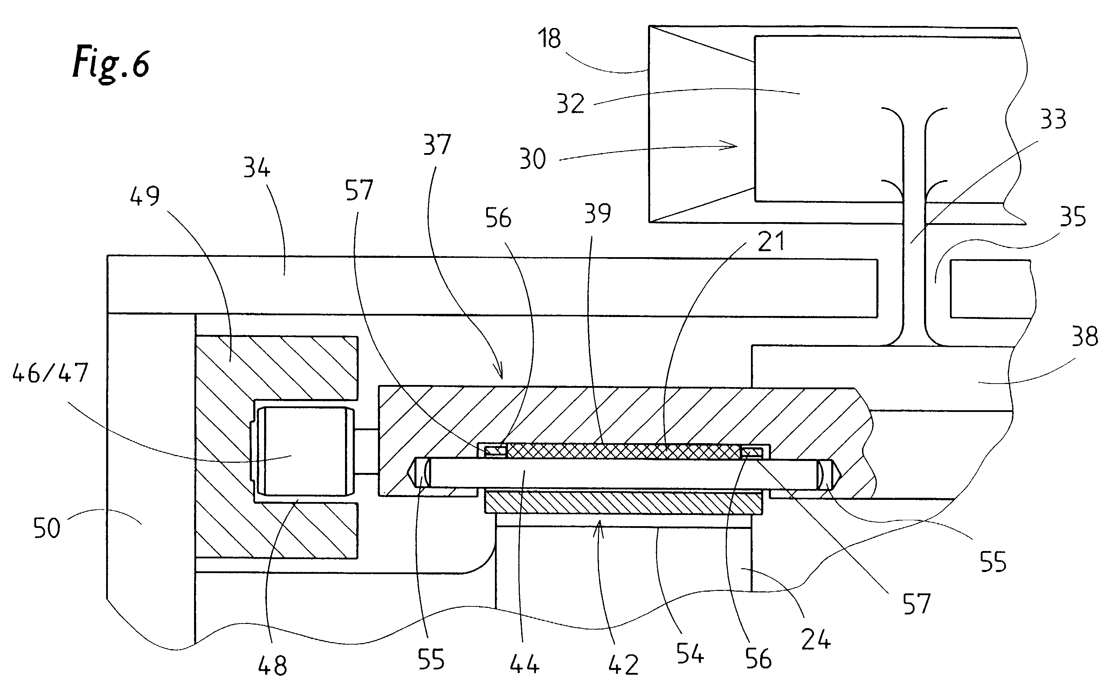

Der in der beschriebenen Weise mit dem Endlosförderer 19, 20 bzw. Zahnriemen 21 verbundene Mitnehmer 30 soll gesteuerte Ausgleichsbewegungen durchführen. Einzelne Phasen der Bewegungen sind beispielshaft in Fig 5 bis Fig. 6 gezeigt. Fig. 4 zeigt eine Stellung des Mitnehmers 30 im Bereich der Umlenkung des Endlosförderers 19, 20. Bei der Rückkehr aus der Umlenkstellung in die horizontale Förderebene treten aufgrund der abrupten Änderung der Winkelgeschwindigkeit erhebliche Kräfte im Bereich der Mitnehmer auf. Um diesen entgegenzuwirken, wird der Mitnehmer 30 im Bereich des Übergangs in die horizontale Förderebene rückwärts bewegt, also entgegen der durch Pfeil angedeuteten Förderbewegung. Nach Eintritt in die horizontale Förderebene (Fig. 4) wird eine entgegengesetzte, ausgleichende Kippbewegung in Förderrichtung nach vorn ausgeführt (Fig. 5). Bei diesen Kippbewegungen wälzen sich die Anlagefläche 41 auf der Außenseite des Zahnriemens 21 und die Stützfläche 43 an der Innenseite ab, letztere auf den ebenen Flächen von benachbarten Zähnen 22.

In analoger Weise wird auf den Mitnehmer 30 eine entgegengesetzte, also in Förderrichtung verlaufende Gegen- bzw. Rückkehrbewegung ausgeübt, so dass im Anschluss daran der Mitnehmer die korrekte Relativstellung erhält.

Eine besonders wichtige Ausgleichsbewegung der Mitnehmer 30 ist im Bereich der Übernahme der Zigaretten 10 bzw. der Zigarettengruppe 12 vorgesehen. Unmittelbar vor Anlage des Kopfes 32 an der Rückseite der Zigarettengruppe 12 wird der Mitnehmer 30 nach rückwärts bewegt, so dass die Relativbewegung zwischen Mitnehmer 30 bzw. Kopf 32 einerseits und Zigarettengruppe 12 andererseits reduziert ist. Im Anschluss daran, nämlich nach Übernahme der Zigarettengruppe 12 durch den Mitnehmer 30 wird die Förderbewegung zunächst mit einer nach vorn gerichteten Gegenbewegung ausgeglichen und sodann mit der (kontinuierlichen) Förderbewegung des Zigarettenförderers 15 fortgesetzt.

Die beschriebenen Ausgleichsbewegungen der Mitnehmer 30 werden durch formschlüssige Führungsorgane bewirkt. Jedem Mitnehmer 30 sind Führungsrollen zugeordnet. An beiden Enden der Traversen 37 sind zwei im Abstand voneinander liegende Führungsrollen 46, 47 angeordnet. Die beiden Führungsrollen 46, 47 laufen in gemeinsamen, seitlichen und ortsfesten Führungen, nämlich in einer Führungsnut 48. Diese ist in einem seitlichen, ortsfesten Konstruktionsteil der Vorrichtung gebildet, nämlich in Führungsschienen 49, die sich in Längsrichtung an einer aufrechten Gehäusewand 50 erstrecken. Die Führungsnuten 48 laufen über die volle Bewegungsstrecke der Mitnehmer 30, erstrecken sich also im Bereich eines Obertrums, eines Untertrums und im Bereich der Umlenkung bzw. der Umlenkräder 24, 25. Die Führungsnut 48 ist durch (obere und untere bzw. äußere und innere) Führungsflächen 51, 52 begrenzt, an denen die Führungsrollen 46, 47 ablaufen.

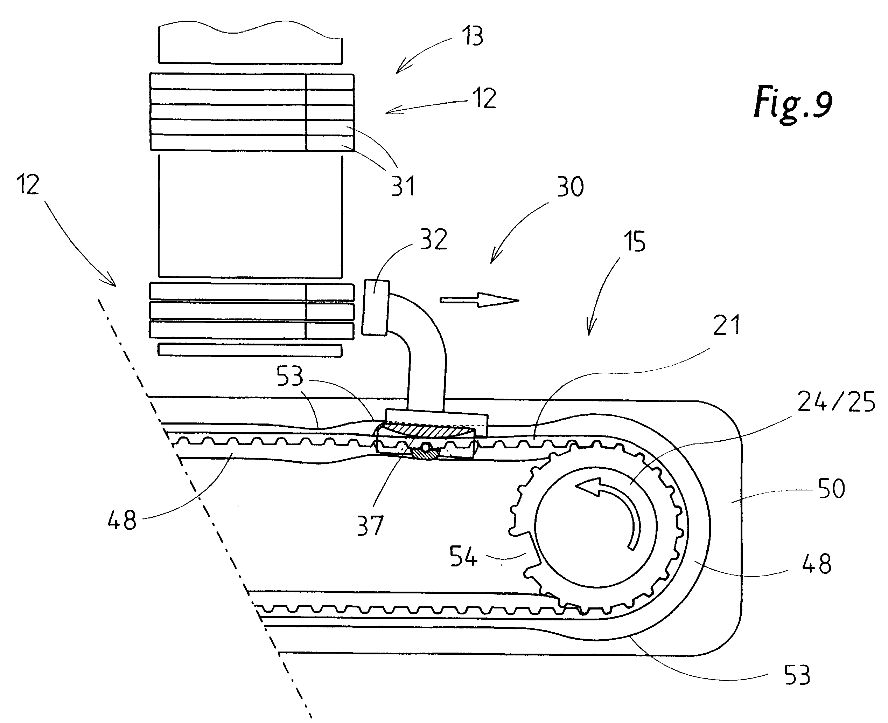

Im Bereich der Ausgleichsbewegungen der Mitnehmer 30 weist die Führungsnut 48 bzw. weisen die Führungsflächen 51, 52 nach oben bzw. unten oder außen bzw. innen gerichtete gekrümmte Ausformungen 53 auf, die die jeweils gewünschte Bewegung der Mitnehmer 30 bewirken. Die Ausformungen 53 sind so ausgebildet bzw. positioniert, dass bei erhöhter vorgegebener Geschwindigkeit der Mitnehmer 30 diese zunächst in einer zur Förderrichtung entgegengesetzten Kippbewegung verzögert und sodann durch eine (Gegen-)Ausformung 53 in die Ausgangsstellung zurückbewegt werden. Bei der Mitnahme einer Zigarettengruppe 12 (Fig. 9) durchlaufen demnach die Führungsrollen 46, 47 zuerst eine aufwärts gerichtete Ausformung, um eine nach rückwärts gerichtete Kippbewegung zu erzeugen und sodann eine entgegengesetzt gerichtete Ausformung als Ausgleichsbewegung, nämlich nach dem Erfassen einer Zigarettengruppe 12.

Die Abstände der Mitnehmer 30 können beliebig gewählt sein, müssen jedoch an die Drehbewegung der Umlenkräder 24, 25 angepasst sein. Bei dem gezeigten Ausführungsbeispiel entspricht der Abstand zwischen aufeinanderfolgenden Mitnehmern 30 dem Umfang der Umlenkräder 24, 25. Diese sind deshalb mit einer Vertiefung 54 versehen, in die der Gegenhalter 42 während der Bewegung im Bereich der Umlenkräder 24, 25 eintritt.

Bei dem gezeigten Ausführungsbeispiel wird die Ausgleichsbewegung der Mitnehmer 30 durch eine elastische Verformbarkeit der Endlosförderer 19, 20 begünstigt. Das System kann aber auch bei in anderer Weise ausgebildeten Endlosförderern eingesetzt werden. In diesem Falle muss die Verbindung der Mitnehmer mit den Endlosförderern so ausgebildet sein, dass die Ausgleichsbewegung ausschließlich in diesem Bereich aufgenommen wird.

Die Ausgestaltung des Zigarettenförderers kann auch auf einen Taschenförderer angewendet werden, nämlich auf den Bereich der Umlenkung von Endlosförderern desselben. Des weiteren kann die beschriebene Verbindung der Mitnehmer bzw. Traversen mit dem Zahnriemen auch in anderem Zusammenhang angewendet werden.

### Bezugszeichenliste:

- 10: Zigarette
- 11: Zigaretten-Magazin
- 12: Zigarettengruppe
- 13: Zigaretten-Revolver
- 14: Tasche
- 15: Zigarettenförderer
- 16: Faltstation
- 17: Zuschnitt
- 18: Zigarettenblock
- 19: Endlosförderer
- 20: Endlosförderer
- 21: Zahnriemen
- 22: Zahn
- 23: Zahnlücke
- 24: Umlenkrad
- 25: Umlenkrad
- 26: Vorsprung
- 27: Vertiefung
- 28: Welle
- 29: Antriebswelle
- 30: Mitnehmer
- 31: Filter
- 32: Kopf
- 33: Steg
- 34: Bahnplatte
- 35: Schlitz
- 36: Schlitz
- 37: Traverse
- 38: Sockel
- 39: Vertiefung
- 40: Stützkörper
- 41: Anlagefläche
- 42: Gegenhalter
- 43: Stützfläche
- 44: Stift
- 45: Ausnehmung
- 46: Führungsrolle
- 47: Führungsrolle
- 48: Führungsnut
- 49: Führungsschiene
- 50: Gehäusewand
- 51: Führungsfläche
- 52: Führungsfläche
- 53: Ausformung
- 54: Vertiefung
- 55: Bohrung
- 56: Schenkel
- 57: Durchtrittsbohrung

## Patentansprüche

1. Vorrichtung zum Transport von Gegenständen, insbesondere Zigarettengruppen (12), mit einem Endlosförderer (19, 20), der quer zur Förderebene gerichtete Mitnehmer (30) aufweist, die bewegbar am Endlosförderer (19, 20) befestigt und durch Führungsmittel derart relativ zum Endlosförderer (19, 20) bewegbar sind, dass bei Übernahme eines Gegenstands und/oder bei Richtungsänderung der Förderbewegung die Mitnehmer (30) kurzzeitig eine der Förderrichtung entgegengesetzte Ausgleichsbewegung und vorzugsweise im Anschluss daran eine gegenläufige, in Förderrichtung weisende Rückbewegung durchführen, **gekennzeichnet durch** folgende Merkmale:
a) eine Halterung zur Befestigung der Mitnehmer (30) am Endlosförderer (19, 20) ist schwenkbar mit dem Endlosförderer (19, 20) verbunden, derart, dass Kipp- bzw. Schwenkbewegungen der Mitnehmer (30) in der Förderrichtung bzw. in der entgegengesetzten Richtung ausführbar sind,
b) im Bereich der auszuführenden Ausgleichsbewegung der Mitnehmer (30) ist die Halterung zur Befestigung der Mitnehmer (30) am Endlosförderer (19, 20) zwangsgeführt, nämlich **durch** Führungsrollen (46, 47) in einer ortsfesten Führungsnut (48),
c) die Führungsnut (48) erstreckt sich über die gesamte Bewegungsbahn der Mitnehmer (30).

2. Vorrichtung nach Anspruch 1, **dadurch gekennzeichnet, dass** die Führungsnut (48) für die Führungsrollen (46, 47) im Bereich der Ausgleichsbewegungen eine diese steuernde Ausformung (53) aufweist.

3. Vorrichtung nach einem der vorhergehenden Ansprüche, **dadurch gekennzeichnet, dass** die Halterung eine Traverse (37) ist, die eine an der äußeren Seite der Endlosförderer (19, 20) anliegende, gewölbte bzw. ballige Stützfläche (43) aufweist und dass ein Gegenorgan an der Innenseite des Endlosförderers (19, 20), nämlich ein Gegenhalter (42), der eine ebenfalls gewölbte bzw. ballig ausgebildete Stützfläche (43) zur Anlage am Endlosförderer (19, 20) aufweist.

4. Vorrichtung nach Anspruch 3, **dadurch gekennzeichnet, dass** der Gegenhalter (42) lösbar mit der Traverse (37) verbunden ist.

5. Vorrichtung nach Anspruch 4, **dadurch gekennzeichnet, dass** der Endlosförderer (19, 20) als Zahnriemen (21) ausgebildet ist mit nach innen weisenden Zähnen (22), wobei der Gegenhalter (42) an der Innenseite positioniert und über einen Stift (44) lösbar mit der Traverse (37) verbunden ist, wobei der Stift (44) passend in einer Zahnlücke (23) positioniert ist, derart, dass er etwa mittig zur neutralen Zone des Zahnriemens (21) angeordnet ist.

6. Vorrichtung nach einem der Ansprüche 3 bis 5, **dadurch gekennzeichnet, dass** bei zweibahniger Betriebsweise zwei im Abstand voneinander angeordnete, parallele Endlosförderer (19, 20), jeweils Mitnehmer (30) zum Transport eines Gegenstands aufweisen, wobei die Endlosförderer (19, 20) gleichzeitig und synchron kontinuierlich bewegt werden und durch die Traverse (37) miteinander verbunden sind.

7. Vorrichtung nach Anspruch 6, **dadurch gekennzeichnet, dass** die beiden Führungsrollen (46, 47) jeweils an den freien Enden der Traversen (37) angeordnet sind.

## Claims

1. Apparatus for transporting articles, in particular cigarette groups (12), having an endless conveyor (19, 20) which has carry-along elements (30) which are directed transversely to the conveying plane, are fastened in a moveable manner on the endless conveyor (19, 20) and can be moved relative to the endless conveyor (19, 20) by guide means such that, when an article is received and/or the direction of the conveying movement is changed, the carry-along elements (30) briefly execute a compensating movement counter to the conveying direction and preferably then execute an oppositely directed return movement, which is oriented in the conveying direction, **characterized by** the following features:
a) a mount for fastening the carry-along elements (30) on the endless conveyor (19, 20) is connected in a pivotable manner to the endless conveyor (19, 20) such that the carry-along elements (30) can execute tilting or pivoting movements in the conveying direction and in the opposite direction,
b) in the region of the compensating movement of the carry-along elements (30) which is to be executed, the mount for fastening the carry-along elements (30) on the endless conveyor (19, 20) is guided positively, that is to say by guide rollers (46, 47) in a stationary guide groove (48),
c) the guide groove (48) extends over the entire movement path of the carry-along elements (30).

2. Apparatus according to Claim 1, **characterized in that** the guide groove (48) for the guide rollers (46, 47), in the region of the compensating movements, has a shaped portion (53) which controls the latter.

3. Apparatus according to one of the preceding claims, **characterized in that** the mount is a crossmember (37) which has a curved or convex supporting surface (43) which butts against the outer side of the endless conveyors (19, 20), and **in that** a counterpart on the inside of the endless conveyor (19, 20), namely a steadying element (42), has a likewise curved or convexly designed supporting surface (43) for butting against the endless conveyor (19, 20).

4. Apparatus according to Claim 3, **characterized in that** the steadying element (42) is connected releasably to the crossmember (37).

5. Apparatus according to Claim 4, **characterized in that** the endless conveyor (19, 20) is designed as a toothed belt (21) with inwardly oriented teeth (22), the steadying element (42) being positioned on the inside and being connected releasably to the crossmember (37) via a pin (44), the pin (44) fitting in a tooth gap (23) such that it is arranged approximately centrally in relation to the neutral zone of the toothed belt (21).

6. Apparatus according to one of Claims 3 to 5, **characterized in that**, in double-track operation, two spaced-apart parallel endless conveyors (19, 20) each have carry-along elements (30) for transporting an article, the endless conveyors (19, 20) being moved simultaneously and synchronously on a continuous basis and being connected to one another by the crossmember (37).

7. Apparatus according to Claim 6, **characterized in that** the two guide rollers (46, 47) are arranged in each case at the free ends of the crossmembers (37).

## Revendications

1. Dispositif de transport d'objets, en particulier de groupes de cigarettes (12), comportant un transporteur sans fin (19, 20) qui présente des entraîneurs (30) dirigés perpendiculairement au plan de transport qui sont fixés de manière mobile au transporteur sans fin (19, 20) et sont mus par des moyens de guidage par rapport au transporteur sans fin (19, 20) de façon telle qu'à la prise d'un objet et/ou au changement de sens du mouvement de transport, les entraîneurs (30) exécutent pendant un court moment un mouvement de compensation opposé au sens de transport et de préférence, après celui-ci, un mouvement en arrière en sens contraire dans le sens de transport, **caractérisé par** les caractéristiques suivantes :
a) un support pour la fixation des entraîneurs (30) au transporteur sans fin (19, 20) est joint de manière articulée au transporteur sans fin (19, 20) de façon telle que puissent être exécutés des mouvements de basculement ou de pivotement des entraîneurs (30) dans le sens de transport ou dans le sens opposé,
b) dans la zone du mouvement de compensation à exécuter des entraîneurs (30), le support pour la fixation des entraîneurs (30) au transporteur sans fin (19, 20) est guidé de manière forcée, ce par des galets de guidage (46, 47) situés dans une rainure fixe de guidage (48),
c) la rainure de guidage (48) s'étend sur toute la trajectoire des entraîneurs (30).

2. Dispositif selon la revendication 1, **caractérisé par le fait que** la rainure de guidage (48) pour les galets de guidage (46, 47) présente dans la zone des mouvements de compensation une forme (53) qui commande ceux-ci.

3. Dispositif selon l'une des revendications précédentes, **caractérisé par le fait que** le support est une traverse (37) qui présente une surface d'appui bombée (43) qui s'appuie sur le côté extérieur du transporteur sans fin (19, 20), et que sur le côté intérieur du transporteur sans fin (19, 20) est prévu un contre-organe, à savoir un contre-support (42) qui présente une surface d'appui également bombée (43) destinée à s'appuyer sur le transporteur sans fin (19, 20).

4. Dispositif selon la revendication 3, **caractérisé par le fait que** le contre-support (42) est joint de manière amovible à la traverse (37).

5. Dispositif selon la revendication 4, **caractérisé par le fait que** le transporteur sans fin (19, 20) est une courroie dentée (21) à dents (22) dirigées vers l'intérieur, le contre-support (42) étant placé sur le côté intérieur et joint de manière amovible à la traverse (37) par une goupille (44), la goupille (44) étant placée en s'y ajustant dans un entredent (23) de façon telle qu'elle se trouve à peu près au milieu de la zone neutre de la courroie dentée (21).

6. Dispositif selon l'une des revendications 3 à 5, **caractérisé par le fait qu'**en cas de fonctionnement à deux voies, deux transporteurs sans fin parallèles placés à distance l'un de l'autre (19, 20) présentent chacun des entraîneurs (30) pour le transport d'un objet, ces transporteurs (19, 20) étant mus de façon continue simultanément et en synchronisme et reliés par la traverse (37).

7. Dispositif selon la revendication 6, **caractérisé par le fait que** les deux galets de guidage (46, 47) sont placés respectivement aux extrémités libres des traverses (37).
